# EUROPÄISCHE PATENTANMELDUNG

(11) **EP 3 208 756 A1**
(43) Veröffentlichungstag der Anmeldung: **23.08.2017**
(21) Anmeldenummer: 17154602.1
(22) Anmeldetag: 03.02.2017
(51) Int. Cl.: G06Q 10/02

(54) **REISEDIENSTLEISTUNGSSYSTEM FÜR DIE KOMMUNIKATION ZWISCHEN EINEM REISENDEN UND EINEM VERKEHRSDIENSTLEISTER**

(30) Priorität: 19.02.2016 DE 102016202611
(71) Anmelder: Siemens Aktiengesellschaft, 80333 München (DE)
(72) Erfinder: Giere, Steffen, 38159 Vechelde (DE)

(57) **Zusammenfassung**

Es wird ein Reisedienstleistungssystem (100) für die Kommunikation zwischen einem Reisenden und einem Verkehrsdienstleister beschrieben. Das Reisedienstleistungssystem (100) umfasst eine mobile, einem Reisenden zugeordnete Kommunikationseinrichtung (20), welche dazu eingerichtet ist, drahtlos mit anderen Kommunikationseinrichtungen (30) zu kommunizieren. Es umfasst außerdem eine Identifizierungsmarke (11), welche an einer Verkehrsdienstleistungseinrichtung (10) des Verkehrsdienstleisters angeordnet ist und einen durch die mobile Kommunikationseinrichtung (20) maschinell lesbaren Identifizierungscode (ID) aufweist. Weiterhin weist das Reisedienstleistungssystem (100) eine Verkehrsdienstleistungs-Kommunikationseinrichtung (30) auf, welche dazu eingerichtet ist, von der mobilen Kommunikationseinrichtung (20) eine von dem Identifizierungscode (ID) umfasste Identitäts-Information (IDD) zu empfangen, eine der Identitäts-Information (IDD) zugeordnete Verkehrsdienstleistungseinrichtung (10) zu identifizieren und dem Reisenden über dessen mobile Kommunikationseinrichtung (20) der identifizierten Verkehrsdienstleistungseinrichtung (10) zugeordnete Reisedienstleistungen zur Verfügung zu stellen. Es wird auch ein Verfahren (200) für die Kommunikation zwischen einem Reisenden und einem Verkehrsdienstleister beschrieben.

## Beschreibung

Die Erfindung betrifft ein Reisedienstleistungssystem und ein Verfahren für die Kommunikation zwischen einem Reisenden und einem Verkehrsdienstleister.

Die Nutzung öffentlicher Verkehrsmittel wird heutzutage aus verschiedenen Gründen gefördert. Zunächst sind öffentliche Verkehrsmittel aufgrund von Skaleneffekten und Dichtevorteilen normalerweise energieeffizienter und damit umweltfreundlicher als mit Verbrennungsmotoren betriebene Individualverkehrsmittel. Weiterhin sind öffentliche Verkehrsmittel in Ballungsräumen und zwischen Ballungsräumen aufgrund der dort herrschenden Verkehrsdichte meist auch effizienter, schneller und deren Nutzung zeitlich besser planbar, insbesondere dann, wenn sie wie bei U-Bahnen und Hochgeschwindigkeitszügen über ein eigenes Verkehrswegenetz verfügen, das ausschließlich von ihnen selbst genutzt wird. Überdies ist die Palette der Arbeits- und Freizeitaktivitätsmöglichkeiten während der in öffentlichen Verkehrsmitteln verbrachten Zeit nicht so eingeschränkt wie das insbesondere für Fahrer von Individualverkehrsmitteln, die sich selbst auf den Verkehr konzentrieren müssen, der Fall ist.

Eine Schwierigkeit bei der Benutzung von öffentlichen Verkehrsmitteln besteht dann, wenn diese unter Zeitdruck oder in Echtzeit genutzt werden sollen. Dies kann zum Beispiel dann notwendig sein, wenn sich der Reisende spontan für die Nutzung eines Verkehrsmittels zu einem bestimmten Zweck entscheidet oder unvorhergesehene Ereignisse und Ausfälle im Verkehrssystem Änderungen in der Planung einer Reise auch während der Reise plötzlich nötig werden lassen. Um die notwendigen Informationen für eine solche flexible Reaktion zu erhalten, nutzen Reisende häufig ihr Smartphone. Dabei können sich relevante Informationen auf die aktuell genutzte Reisedienstleistung, wie zum Beispiel aktuelle Ankunftszeiten beim nächsten Halt des Verkehrsmittels oder Informationen zum weiteren Verlauf der Reise, beispielsweise eine Karte des Zielbahnhofs oder Informationen zu einem notwendigen Zugwechsel, beziehen. Allerdings benötigen auch solche Recherchen eine gewisse Erfahrung im Umgang mit Informationsangeboten. Außerdem muss der Reisende, wenn er zum Beispiel die notwendigen Informationen über eine Reisedienstleistung, wie zum Beispiel die Bezeichnung des Verkehrsmittels, den Startort, den Zielort, Preise, die Abfahrtszeit und die Ankunftszeit herausgefunden hat, diese Informationen korrekt nutzen. Beispielsweise muss er das gewünschte Verkehrsmittel im Umfeld einer Haltestelle korrekt identifizieren, die richtige Abfahrtsposition finden, die entsprechende Fahrkarte für die gewünschte Fahrt mit dem gewünschten Verkehrsmittel lösen und bezahlen usw.

Für die Buchung einer Reise und deren Bezahlung muss ein Fahrgast im öffentlichen Personenverkehr also vor Antritt seiner Reise üblicherweise ein Ticket für seine Reise an einem Fahrkartenautomaten des benutzten Verkehrsmittelbetreibers erwerben. Zuvor muss er sich informieren, welche Fahrzeuge zu welcher Zeit von seinem Startort zu seinem gewünschten Zielort fahren. Zudem muss er die Tickets für ein oder mehrere Fahrzeuge seiner Reise buchen. Zusätzlich kann er für jedes Fahrzeug einen Sitzplatz reservieren. Schließlich muss er die Tickets auch bezahlen.

Bisher muss ein Fahrgast also viele unterschiedliche Aktionen vornehmen, bis er für eine Reise seine Tickets mit eventueller Sitzplatzreservierung gebucht und seine reservierten Sitzplätze gefunden hat. Der Fahrgast muss oft sogar für seine Reise einen oder mehrere Verkehrsmittelbetreiber auswählen. Dabei muss er für jeden Verkehrsmittelbetreiber ein anderes Buchungssystem wählen. Beispielsweise sind unterschiedlichen Verkehrsmittelbetreibern unterschiedliche Fahrkartenautomaten, Fahrkartenschalter, Webserverseiten und Smartphone-Apps zu geordnet. Dabei benötigt jedes Buchungssystem unterschiedliche betreiberspezifische Bedienhandlungen. Eventuell müssen verschachtelte Menüstrukturen angewählt werden und viele Eingabeelemente editiert werden. Der Fahrgast muss weiterhin für jedes Fahrzeug viele Ticketbuchungsdaten eingeben, wie zum Beispiel den Fahrzeugtyp, das Startdatum und die Uhrzeit, den Startort, den Zielort, die Beförderungsklasse, die Ticketart mit Einzelfahrt, Mehrfachfahrt, Gruppenkarte und eventuelle Rabattkarten. Möchte ein Fahrgast Sitzplätze reservieren, so muss er für jedes Fahrzeug viele Sitzplatzreservierungsdaten eingeben, wie zum Beispiel die Abteilart und die Platzlage. Außerdem muss er für jedes Ticket eine der zur Verfügung stehenden Bezahlungsarten wählen, die für verschiedene Buchungssysteme unterschiedlich sein können, da einige Buchungssysteme nur Münzen, andere nur Papiergeld und wieder andere nur Kartenkontonummern akzeptieren. Hat der Fahrgast seine Tickets gelöst, so muss er sich zur richtigen Zeit am vorgesehenen Abfahrtsort des gebuchten Reisemittels einfinden. Hat er den Abfahrtsort erreicht, so muss er dort über Anzeigetafeln suchen, wo sich sein gebuchtes Fahrzeug, sein Wagon und Sitzplatz befinden. Dabei kann es zu unvorhersehbaren Problemen kommen. Fährt zum Beispiel ein Bahnfahrzeug in anderer Wagonreihenfolge in einen Bahnhof ein, so muss der Fahrgast weite Strecken bis zu seinem reservierten Sitzplatz laufen. Hat der Fahrgast schließlich seinen Sitzplatz erreicht, so stellt er vielleicht fest, dass sein gebuchter Sitzplatz nicht in der gewünschten Fahrtrichtung ausgerichtet ist. Kommt es zu unvorhersehbaren Zwischenfällen, wie zum Beispiel, dass ein Fahrzeug ausfällt oder der Fahrgast daran gehindert wird, zur Buchungszeit sich am Abfahrtsort einzufinden, so muss der Fahrgast seine Tickets und Sitzplatzreservierungen umbuchen.

Insbesondere unter Zeitdruck und für Ungeübte können diese Tätigkeiten eine Überforderung darstellen, so dass ein breiter Personenkreis öffentliche Verkehrsmittel entweder gar nicht oder nur sehr eingeschränkt, beispielsweise für Routinefahrten, wie zum Beispiel Pendelfahrten zur Arbeit oder regelmäßige Fahrten zum Einkaufen, nutzt.

Es ist somit eine Aufgabe der vorliegenden Erfindung, ein komfortableres und effektiveres Reisedienstleistungssystem, welches insbesondere auch für eine spontane Nutzung und für einen breiteren Personenkreis geeignet ist, anzugeben.

Diese Aufgabe wird durch ein Reisedienstleistungssystem gemäß Patentanspruch 1 und durch ein Verfahren für die Kommunikation zwischen einem Reisenden und einem Verkehrsdienstleister gemäß Patentanspruch 13 gelöst.

Das erfindungsgemäße Reisedienstleistungssystem für die Kommunikation zwischen einem Reisenden und einem Verkehrsdienstleister umfasst eine mobile, einem Reisenden zugeordnete Kommunikationseinrichtung. Diese mobile Kommunikationseinrichtung, auch als mobiles Endgerät bezeichnet, ist dazu eingerichtet, drahtlos mit anderen Kommunikationseinrichtungen zu kommunizieren. Ein solches mobiles Endgerät kann zum Beispiel ein Smartphone oder ein Fotomobiltelefon oder ein Tablet-Computer oder allgemein ein portabler Computer sein. Weiterhin umfasst das erfindungsgemäße Reisedienstleistungssystem eine Identifizierungsmarke, welche an einer Verkehrsdienstleistungseinrichtung des Verkehrsdienstleisters angeordnet ist und einen durch die mobile Kommunikationseinrichtung maschinell bzw. automatisiert lesbaren Identifizierungscode aufweist. Der maschinenlesbare Code kann zum Beispiel einen QR-Code und/oder einen Bar-Code umfassen.

Bei einem QR-Code handelt es sich um einen graphischen zweidimensionalen Code. Weiterentwicklungen sind zum Beispiel der Micro-QR-Code, der Secure-QR-Code, der iQR-Code oder der Frame-QR-Code. Ein QR-Code besteht aus einer quadratischen Matrix aus schwarzen und weißen Quadraten, die die kodierten Daten binär darstellen. Eine spezielle Markierung in drei der vier Ecken eines Quadrats gibt die Orientierung vor. Die Daten im QR-Code sind durch einen fehlerkorrigierenden Code geschützt. Dadurch wird der Verlust von bis zu 30 % des Codes toleriert, d. h. er kann auch dann noch dekodiert werden, wenn Teile des Codes nicht mehr erkennbar sind. Ein solcher QR-Code kann zum Beispiel mit Hilfe eines Aufklebers auf einem Objekt befestigt sein oder einfach darauf aufgemalt bzw. aufgedruckt sein. Alternativ kann der maschinell lesbare Code auch in einem RFID-Chip gespeichert sein, insbesondere einem passiven RFID-Chip, der ebenfalls ohne eine eigene Energieversorgung auskommt.

Teil des erfindungsgemäßen Reisedienstleistungssystems ist außerdem eine Verkehrsdienstleistungs-Kommunikationseinrichtung, welche dazu eingerichtet ist, von der mobilen Kommunikationseinrichtung eine von dem Identifizierungscode umfasste Identitätsinformation zu empfangen, eine der Identitätsinformation zugeordnete Verkehrsdienstleistungseinrichtung zu identifizieren und dem Reisenden über dessen mobile Kommunikationseinrichtung der identifizierten Verkehrsdienstleistungseinrichtung zugeordnete Reisedienstleistungen zur Verfügung zu stellen.

Im einfachsten Fall reicht es für den Benutzer des mobilen Endgeräts aus, ein Anwendungsprogramm auf seinem mobilen Endgerät zu haben, welches die Kommunikation mit der Verkehrsdienstleistungs-Kommunikationseinrichtung automatisiert durchführt bzw. regelt, so dass der Benutzer davon befreit ist, den eingelesenen Identifizierungscode selbststätig an die Verkehrsdienstleistungs-Kommunikationseinrichtung zu übermitteln. Bei der Verkehrsdienstleistungs-Kommunikationseinrichtung kann es sich zum Beispiel um einen Server oder einen virtuellen Server oder ein von einem Verkehrsdienstleister über ein Netz, insbesondere das Internet, bereitgestelltes elektronisches Dienstleistungssystem handeln. Vorteilhaft muss sich der Reisende nicht um die für eine Aktion, wie zum Beispiel die Wahl des korrekten Verkehrsmittels, die Buchung einer Fahrkarte oder ähnliches, notwendige Suche nach Informationen und deren Verarbeitung kümmern, sondern braucht lediglich die vor Ort gut sichtbar und erreichbar angeordnete Identifizierungsmarke einlesen und an den entsprechenden Verkehrsdienstleister übermitteln. Anschließend erhält er maßgeschneidert auf seine Situation Informationen und Angebote, aus denen er sich das geeignete auswählen kann. Das beschriebene Dienstleistungssystem erleichtert dem Reisenden nicht nur das Auffinden von passenden Reiseinformationen und Dienstleistungen, sondern trägt auch erheblich zur Reduktion der Komplexität der Entscheidungsgrundlage eines Reisenden bei, so dass er seine Entscheidungen schneller und unter einer deutlich geringeren Stressbelastung treffen kann.

Bei dem erfindungsgemäßen Verfahren für die Kommunikation eines Reisenden mit einem Verkehrsdienstleister wird mit Hilfe einer mobilen, einem Reisenden zugeordneten Kommunikationseinrichtung, welche dazu eingerichtet ist, drahtlos mit anderen Kommunikationseinrichtungen zu kommunizieren, eine Identifizierungsmarke ausgelesen, welche an einer Verkehrsdienstleistungseinrichtung des Verkehrsdienstleisters angeordnet ist und einen maschinell durch die mobile Kommunikationseinrichtung lesbaren Identifizierungscode aufweist.

Weiterhin wird mit Hilfe einer von dem Verkehrsdienstleister betriebenen Verkehrsdienstleistungs-Kommunikationseinrichtung von der mobilen Kommunikationseinrichtung eine von dem Identifizierungscode umfasste Identitätsinformation empfangen, eine der Identitätsinformation zugeordnete Verkehrsdienstleistungseinrichtung identifiziert und es werden dem Reisenden über dessen mobile Kommunikationseinrichtung der identifizierten Verkehrsdienstleistungseinrichtung zugeordnete Reisedienstleistungen zur Verfügung gestellt. Unter einer Verkehrsdienstleistungseinrichtung sollen insbesondere Verkehrsmittel, wie zum Beispiel Züge, U-Bahnen, Straßenbahnen, Busse, Schiffe, Flugzeuge und die betreffende Infrastruktur zum Zusteigen und Aussteigen, wie zum Beispiel Bahnhöfe, Bahnsteige, Flughäfen, Terminals, Gates und ähnliches verstanden werden.

Einige Komponenten des erfindungsgemäßen Reisedienstleistungssystems können zum überwiegenden Teil in Form von Softwarekomponenten ausgebildet sein. Dies betrifft insbesondere funktionelle Merkmale der Verkehrsdienstleistungs-Kommunikationseinrichtung und der mobilen Kommunikationseinrichtung.

Eine weitgehend softwaremäßige Realisierung hat den Vorteil, dass auch schon bisher verwendete Komponenten eines Verkehrsdienstleistungssystems auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer oder mehrerer Komponenten eines Verkehrsdienstleistungssystems ladbar ist, mit Programmabschnitten, um alle Schritte des erfindungsgemäßen Verfahrens auszuführen, wenn das Programm in einer oder mehreren Komponenten des Verkehrsdienstleistungssystems ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen.

Zum Transport zu einer oder mehreren Komponenten und/oder zur Speicherung an oder in einer oder mehreren Komponenten des Verkehrsdienstleistungssystems kann ein computerlesbares Medium, beispielsweise ein Memorystick, eine Festplatte oder ein sonstiger transportabler oder fest eingebauter Datenträger dienen, auf welchem die von einer Rechnereinheit einer Komponente des Verkehrsdienstleistungssystems einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung auch die verschiedenen Merkmale unterschiedlicher Ausführungsbeispiele und Ansprüche zu neuen Ausführungsbeispielen kombiniert werden.

In einer bevorzugten Ausgestaltung des erfindungsgemäßen Reisedienstleistungssystems weist die mobile Kommunikationseinrichtung eine Abtasteinheit auf. Mit Hilfe der Abtasteinheit ist ein Identifizierungscode maschinell einlesbar. Für den Fall, dass der Identifizierungscode einen Nahbereichsabtastcode umfasst, weist die Abtasteinheit zum Einlesen eines Identifizierungscodes vorzugsweise eine Nahbereichsabtasteinheit auf. Eine solche Nahbereichsabtasteinheit kann zum Beispiel einen optischen Scanner, eine Fotografiefunktion oder eine auf kapazitiver oder induktiver Wechselwirkung basierende Leseeinheit umfassen. Vorteilhaft kann die Identifizierungsmarke mit dem Identifizierungscode als passives System, d.h. ohne aktive Sendeeinrichtung, beispielsweise in graphischer Form, vorzugsweise als QR-Code, ausgebildet sein, welcher von der Abtasteinheit der mobilen Kommunikationseinrichtung gelesen werden kann. Mithin benötigt die Identifizierungsmarke keine Energieversorgung, was mit erhöhter Robustheit und geringerem Wartungsaufwand verbunden ist.

In einer speziellen Ausgestaltung des erfindungsgemäßen Reisedienstleistungssystems umfasst die Verkehrsdienstleistungseinrichtung eine Haltestelle, einen Zugang eines Verkehrsmittels oder einen Sitzplatz des Verkehrsmittels.

Ein solcher Zugang eines Verkehrsmittels kann zum Beispiel ein Zustieg zu einem Bus, einem Eisenbahnwagon oder ähnliches sein. Dabei kann die Identifizierungsmarke direkt neben der Tür des Zustiegs befestigt sein, so dass der Reisende bei dem Betreten des Verkehrsmittels die Identifizierungsmarke in sein Blickfeld bekommt. Üblicherweise besteht im Zusammenhang mit den genannten Infrastruktureinrichtungen ein Informations- und Handlungsbedarf, um diese nutzen zu können. Erfindungsgemäß ist nun an den genannten Infrastruktureinrichtungen eine Identifizierungsmarke angeordnet, die ein Reisender schnell und einfach mit seinem mobilen Endgerät, beispielsweise einem Smartphone, einlesen kann. Die in dem eingelesenen Identifizierungscode enthaltenen Informationen werden dann automatisiert über das mobile Endgerät des Reisenden direkt an eine Servereinheit eines zuständigen Reisedienstleisters übermittelt, welcher dem Reisenden für die jeweilige Infrastruktureinrichtung maßgeschneiderte Reiseinformationen sowie Buchungsangebote übermittelt. Der Reisende braucht sich also vorteilhaft nicht selbst um die Informationsbeschaffung sowie Buchungsmodalitäten zu kümmern. Insbesondere muss er weder nach einem Fahrkartenautomaten noch nach geeigneten Reiseverbindungen suchen, da diese Suchvorgänge von dem Reisedienstleister in Abhängigkeit von den anhand des Identifizierungscodes erfassten Informationen automatisiert durchgeführt werden. Mithin lassen sich Fahrkartenautomaten einsparen und der von Fahrkartenautomaten verbrauchte elektrische Strom ebenfalls sparen. Weiterhin fallen auch Wartungsarbeiten, wie zum Beispiel das Einlegen von Fahrscheinpapier in den Automaten, das Entnehmen von Geld aus dem Automaten oder das Reparieren von durch Vandalismus beschädigten Automaten, weg.

In einer Variante des erfindungsgemäßen Reisedienstleistungssystems umfassen die Reisedienstleistungen die Übermittlung von auf die individuelle Situation des Reisenden abgestimmten Reisedienstleistungsinformationen. Vorteilhaft muss sich der Reisende nicht selbst um die Beschaffung von spezifischen Reisedienstleistungsinformationen kümmern, sondern muss nur den jeweiligen Identifizierungscode vor Ort einlesen. Anschließend erhält er die für seine Situation relevanten Reisedienstleistungsinformationen automatisiert auf sein mobiles Endgerät übermittelt und kann auf Basis dieser Informationen seine Reiseentscheidungen treffen.

Alternativ oder zusätzlich können die Reisedienstleistungen das Anbieten und Durchführen von Ticket-Buchungsdienstleistungen und von Bezahldienstleistungen umfassen. Hat sich der Reisende auf Basis der automatisiert übermittelten Informationen für die Inanspruchnahme eines Verkehrsmittels entschieden, so muss er nicht aktiv die Buchung desselbigen einleiten, sondern braucht beim Betreten des Verkehrsmittels nur erneut einen Identifizierungscode einlesen. Nach einer automatisierten Übermittlung dieser Information an den Reisedienstleister werden dem Reisenden bereits weitgehend ausgefüllte Buchungsformulare auf sein mobiles Endgerät übermittelt, so dass er von einer aktiven Suche nach einer Buchungsmöglichkeit und deren Auswahl und auch teilweise vom Eintragen von Informationen in die Buchungsformulare entlastet ist. Nach der Buchung der gewünschten Fahrt kann der Reisende auch den Bezahlvorgang gestützt auf die dem Dienstleister automatisiert übermittelten Informationen durchführen. Zum Beispiel kann die Abrechnung mit Hilfe der dem Reisedienstleister übermittelten Mobiltelefonnummer des mobilen Endgeräts des Reisenden erfolgen, so dass der Reisende seine Kontodaten gar nicht an den Reisedienstleister übermitteln muss. Anhand der Mobiltelefonnummer wickelt der Reisedienstleister den Bezahlvorgang mit dem Mobilfunkdienstleister des Reisenden ab, dem wiederum die Kontodaten des Reisenden vorliegen. Somit wird dem Reisenden die Eingabe von sensiblen Kontodaten erspart, was einen verbesserten Komfort und eine erhöhte Sicherheit bei dem Bezahlvorgang mit sich bringt.

In einer besonders bevorzugten Ausgestaltung des erfindungsgemäßen Reisedienstleistungssystems ist die Verkehrsdienstleistungs-Kommunikationseinrichtung dazu eingerichtet, mit der mobilen Kommunikationseinrichtung über eine sichere WLAN-Verbindung oder eine LTE-Verbindung oder andere Funkverbindungen zu kommunizieren. Eine WLAN-Verbindung eignet sich besonders für Situationen, bei denen sich der Reisende in der Nähe einer stationären Verkehrsinfrastruktur befindet, welche auch gleichzeitig über einen WLAN-Zugang verfügt. Der Benutzer braucht sich dann nur mit seinem mobilen Endgerät in das lokale WLAN-Netz einzuklinken, ohne beispielsweise einen Zugang zu einem kostenpflichtigen Telefon- oder Datenübertragungsnetzwerk zu haben. Befindet sich der Reisende dagegen nicht in Reichweite eines solchen lokalen Netzwerks, so werden zur Kommunikation zwischen dem mobilen Endgerät und der Verkehrsdienstleistungs-Kommunikationseinrichtung Datenfernübertragungsnetze, wie zum Beispiel Netze nach dem UMTS-Standard oder dem LTE-Standard, benötigt.

In einer speziellen Ausgestaltung des erfindungsgemäßen Reisedienstleistungssystems umfasst die Verkehrsdienstleistungs-Kommunikationseinrichtung einen Reisedienstleistungs-Datenspeicher, welcher den identifizierten Verkehrsdienstleistungseinrichtungen zugeordnete Informationen speichert.

Die den identifizierten Verkehrsdienstleistungseinrichtungen zugeordneten Informationen können zum Beispiel die Art und/oder die geographische Position der Verkehrsdienstleistungseinrichtung und/oder eine voraussichtlich abzufahrende Fahrtroute bzw. einen entsprechenden Fahrplan umfassen. Vorteilhaft erhält der Reisende nach dem Einlesen des Identifizierungscodes diese mit der jeweiligen Verkehrsdienstleistungseinrichtung assoziierten Informationen in aktueller Form automatisiert übermittelt. Beispielsweise wird bei der Übermittlung der Identifikation einer Haltestelle deren Position in einem öffentlichen Verkehrsnetz sowie auch der aktuelle Zeitpunkt automatisiert berücksichtigt, um dem Reisenden für ihn geeignete, individuell angepasste Reiseinformationen übermitteln zu können.

Zusätzlich kann die Verkehrsdienstleistungs-Kommunikationseinrichtung des erfindungsgemäßen Reisedienstleistungssystems dazu eingerichtet sein, auf Basis einer der folgenden, im Zusammenhang mit dem Übermitteln der Identifizierungsdaten übermittelten oder automatisiert ermittelten Informationen eine Ticketbuchung durchzuführen und eine gebuchte elektronische Fahrkarte an die mobile Kommunikationseinrichtung des Fahrgasts zu senden:
- Telefonnummer des Fahrgasts,
- Fahrzeugnummer oder Wagonnummer mit Sitzplatznummer,
- Beförderungsklasse,
- Startort und Zielort für die zu buchende Fahrt.

Beispielsweise kann die Telefonnummer des Fahrgasts bei der Herstellung einer Kommunikationsverbindung zur Übermittlung der Identifizierungsdaten an den Reisedienstleister von diesem automatisiert erfasst werden und beispielsweise für spätere Bezahlvorgänge genutzt werden.

Auf der mobilen Kommunikationseinrichtung kann beispielsweise ein Anwendungsprogramm installiert sein, welches dazu eingerichtet ist, einen erfassten Identifizierungscode auszulesen und die darin enthaltenen Informationen an eine dem Identifizierungscode zugeordnete Verkehrsdienstleistungs-Kommunikationseinrichtung zu übermitteln und Buchungs- und Bezahloperationen durch Kommunikation mit der Verkehrsdienstleistungs-Kommunikationseinrichtung durchzuführen. Dem Identifizierungscode können auch viele verschiedene Verkehrsdienstleistungs-Kommunikationseinrichtungen von verschiedenen Anbietern zugeordnet sein. Wird die Identifizierungsmarke zum Beispiel am Eingang eines Flughafens angeordnet, so erhält der Reisende Informationen von verschiedenen Fluggesellschaften, welche zu dem aktuellen Zeitpunkt zeitnah Flüge anbieten. Liest er anschließend erneut an einem bestimmten Gate eine Identifizierungsmarke ein, so reduziert sich die Kommunikation auf die von dem ausgewählten Gate abfliegende Fluggesellschaft. Dabei adressiert das Anwendungsprogramm in Abhängigkeit von dem eingelesenen Identifizierungscode automatisiert die dem spezifischen Code zugeordneten Fluggesellschaften beispielsweise mit Hilfe einer in dem mobilen Endgerät abgespeicherten Adressdatenbank oder auch einer externen Datenquelle, welche das mobile Endgerät mit Hilfe seines Anwendungsprogramms, beispielsweise über das Internet, kontaktiert. Auf diese Weise erhält der Reisende ohne selbst aktiv werden zu müssen, die für seine Situation passenden Reiseinformationen und Dienstleistungsangebote. Mithin ist der Reisende von Suchanstrengungen und organisatorischen Aufgaben befreit und es verbleibt ihm mehr Zeit und Aufmerksamkeit, um seine Reiseentscheidungen zu treffen oder zu entspannen.

Zusätzlich kann die Verkehrsdienstleistungs-Kommunikationseinrichtung des erfindungsgemäßen Reisedienstleistungssystems dazu eingerichtet sein, auf Basis der Telefonnummer des Fahrgasts und einer über die Verkehrsdienstleistungs-Kommunikationseinrichtung vorgenommenen Ticketbuchung einen elektronischen Bezahlvorgang durchzuführen. Wie bereits erwähnt, wird der Reisende davon befreit, sensible Daten, wie seine Kontonummer, an den betreffenden Verkehrsdienstleister zu übermitteln. Weiterhin wird für ihn der Bezahlvorgang aufgrund des weitgehend automatisierten Prozesses, bei dem bereits dem Verkehrsdienstleister bekannte Informationen automatisch berücksichtigt werden, im Vergleich zu herkömmlichen Bezahlverfahren vereinfacht.

Bevorzugt ist die Reisedienstleistungs-Kommunikationseinrichtung dazu eingerichtet, zumindest eine der folgenden Reiseinformationen der mobilen Kommunikationseinrichtung zur Verfügung zu stellen:
- Fahrplaninformationen,
- Verfügbarkeit eines Verkehrsmittels,
- Kapazitätsauslastung eines von dem zugeordneten Reisedienstleister betriebenen Verkehrsmittels,
- geografische Lageinformation zu einer Verkehrsinfrastruktur, wie zum Beispiel einem Bahnhof, beispielsweise für Zwecke der Navigation.

Überdies kann das erfindungsgemäße Reisedienstleistungssystem zusätzliche Datenbanken aufweisen, welche mit der Reisedienstleistungs-Kommmunikationseinrichtung über eine Datenverbindung verbunden sind. Diese Datenbanken können beispielsweise Informationen bezüglich für Reisende relevanter Dienstleistungen und Warenangebote speichern. Zur Informationsübermittlung sind diese zusätzlichen Datenbanken über die Verkehrsdienstleistungs-Kommmunikationseinrichtung mit der mobilen Kommunikationseinrichtung verbindbar. Beispielsweise kann es sich bei den Warenangeboten um Angebote für den Reisebedarf handeln oder um Werbung für Produkte und Dienstleistungen, welche auf eine bestimmte Reise oder Reisestrecke zugeschnitten ist. Dabei kann die Werbung auf Basis der von der Verkehrsdienstleistungs-Kommunikationseinrichtung über die mobile Kommunikationseinrichtung erhaltenen Informationen spezifiziert werden.

Die Erfindung wird im Folgenden unter Hinweis auf die beigefügten Figurenen anhand von Ausführungsbeispielen noch einmal näher erläutert. Es zeigen:
- FIG 1: eine schematische Darstellung eines Reisedienstleistungssystems gemäß einem ersten Ausführungsbeispiel der Erfindung,
- FIG 2: ein Verfahren zur Kommunikation eines Reisenden mit einem Verkehrsdienstleister gemäß einem ersten Ausführungsbeispiel der Erfindung,
- FIG 3: ein Verfahren zur Kommunikation eines Reisenden mit einem Verkehrsdienstleister gemäß einem zweiten Ausführungsbeispiel der Erfindung.

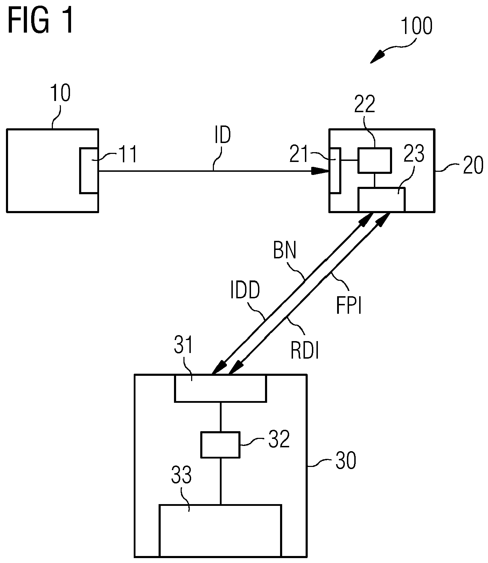

In FIG 1 ist ein Reisedienstleistungssystem 100 gemäß einem ersten Ausführungsbeispiel der Erfindung gezeigt. Das Reisedienstleistungssystem 100 umfasst einen Reisedienstleistungsserver 30, welcher eine Vielzahl von verschiedenen Reisedienstleistungen eines Reisedienstleisters zur Verfügung stellt. Der Reisedienstleistungsserver 30, auch Verkehrsdienstleistungs-Kommunikationseinrichtung genannt, stellt beispielsweise Fahrplaninformationen FPI zur Verfügung und führt elektronische Ticketbuchungen und Bezahlvorgänge für Reisende durch. Der Reisedienstleistungsserver 30 umfasst eine Schnittstelle 31, über die er unter anderem mit mobilen Kommunikationseinrichtungen 20 kommunizieren kann. Weiterhin weist der Reisedienstleistungsserver 30 eine zentrale Prozesseinheit 32 auf, welche die genannten Dienstleistungsprozesse umsetzt. Teil des Reisedienstleistungsservers 30 ist außerdem ein Datenspeicher 33, in dem eine Vielzahl das Reisedienstleistungssystem 100 kennzeichnende Informationen abgespeichert sind, welche zur Durchführung der genannten Dienstleistungsprozesse notwendig sind.

Teil des Reisedienstleistungssystems 100 sind außerdem Identifizierungsmarken 11, welche an Verkehrsdienstleistungseinrichtungen 10, wie zum Beispiel Haltestellen, Einstiegen von Wagons oder anderen Fahrzeugen und Sitzplätzen, angeordnet sind und einen maschinell lesbaren Identifizierungscode ID, in dem konkreten Ausführungsbeispiel einen sogenannten QR-Code, mit einer zusätzlich aufgedruckten Kurzwahlnummer, umfassen.

Der QR-Code ID kann von einem mobilen Endgerät 20, wie zum Beispiel ein Smartphone oder ein Tablet-Computer, gelesen werden. Ein von einem Reisenden genutztes mobiles Endgerät 20 umfasst eine Abtasteinheit 21, mit der der Identifizierungscode ID der Identifizierungsmarken 11 einer Verkehrsdienstleistungseinrichtung 10 gelesen werden kann. Das mobile Endgerät 20 umfasst weiterhin eine zentrale Prozesseinrichtung 22, mit der die Funktionen des mobilen Endgeräts 20, auch mobile Kommunikationseinrichtung genannt, gesteuert werden, sowie eine Sende-Empfangseinheit 23, mit der eine aus dem Identifizierungscode ID extrahierte Identitätsinformation IDD an die Verkehrsdienstleistungs-Kommunikationseinrichtung 30 übermittelt wird. Die Verkehrsdienstleistungs-Kommunikationseinrichtung 30 gleicht nun die empfangene Identitätsinformation IDD mit einer in ihrem Datenspeicher 33 abgespeicherten Identifizierungscodeliste ab und identifiziert damit automatisiert den Träger 10 der Identifizierungsmarke 11, deren Identifizierungscode ID von dem Reisenden mit seinem mobilen Endgerät 20 eingelesen wurde. Nachdem nun der Verkehrsdienstleistungs-Kommunikationseinrichtung 30 die Identität der der Identitätsinformation IDD zugeordneten Verkehrsdienstleistungseinrichtung 10 bekannt ist, bietet sie dem Reisenden durch Kommunikation mit dessen mobilen Endgerät 20 Reisedienstleistungen, wie zum Beispiel Informationen RDI, welche im Zusammenhang mit der identifizierten Verkehrsdienstleistungseinrichtung 10 stehen, oder Buchungs- und Bezahldienstleistungen, welche unter Berücksichtigung der Identität der identifizierten Verkehrsdienstleistungseinrichtung 10 durchgeführt werden, an.

Alternativ kann eine Identifizierungsmarke 11 mit der Kamera 21 eines Fotomobiltelefons 20 fotografiert und per MMS an die auf der Identifizierungsmarke 11 aufgedruckte Kurzwahlnummer der Verkehrsdienstleistungs-Kommunikationseinrichtung 30 gesendet werden. Letztere wertet das Foto der Identifizierungsmarke 11 aus und sendet die Reisedienstleistungen per SMS oder MMS zurück an das Fotomobiltelefon 20. Danach kann der Fahrgast aus einer Liste mit möglichen Zielorten z.B. die davorstehende Zahl eingeben, wie viel Haltestellen er fahren will, oder die Zahl 0 für das Endziel des Fahrzeugs. Nachdem der Fahrgast per SMS oder MMS die fehlenden Buchungsdaten gesendet hat, erhält er die gebuchte Fahrkarte zurückgesendet.

Ist die Identifizierungsmarke 11 zum Beispiel an einem Zustieg eines Wagons eines Zugs angeordnet, welcher von einem Startort zu einem Zielort fährt, so identifiziert die Verkehrsdienstleistungs-Kommunikationseinrichtung 30 auf Basis der Identitätsinformation IDD den Wagon. Anhand der in ihrem Datenspeicher 33 abgespeicherten und ständig aktualisierten Informationen findet die Verkehrsdienstleistungs-Kommunikationseinrichtung 30 außerdem heraus, dass der identifizierte Wagon in einem bestimmten Zug eingesetzt wird, der zu dem aktuellen Zeitpunkt gemäß Fahrplan eine bestimmte Strecke von einem bestimmten Startort zu einem bestimmten Zielort fährt und sich gerade an einem bestimmten Haltepunkt aufhält. Diese Informationen werden bei der Durchführung einer Reisedienstleistung, wie zum Beispiel dem Anbieten von Reiseinformation oder der Buchung und Bezahlung eines Bahntickets, automatisch berücksichtigt, so dass der Reisende diese Daten bei der Wahrnehmung der betreffenden Dienstleistungen nicht mehr von Hand eingeben muss, sondern diese nur noch bestätigen muss. Beispielsweise übersendet die Verkehrsdienstleistungs-Kommunikationseinrichtung 30 an das mobile Endgerät 20 des Reisenden bei einem Buchungsvorgang einer Bahnfahrt von einem Startort zu einem Zielort automatisch den aufgrund des gelesenen Identifizierungscodes herausgefundenen Startort sowie in Frage kommende Zielorte, beispielsweise aufgrund eines der Verkehrsdienstleistungs-Kommunikationseinrichtung 30 bekannten Fahrplans. Der Reisende muss bei einer Buchung die genannten Reisedaten mit seinem mobilen Endgerät 20 nur noch bestätigen und braucht sie nicht mehr selbsttätig herauszusuchen und einzugeben. Auf diese Weise kann ein Reisender seine Reise deutlich schneller und bequemer organisieren als es bei einer herkömmlichen Vorgehensweise möglich ist.

Auf dem mobilen Endgerät 20 kann zum Beispiel ein geeignetes Anwendungsprogramm (App) gespeichert sein, mit dem die von der Verkehrsdienstleistungs-Kommunikationseinrichtung 30 übersandten Reisedaten RDI automatisiert in ein Buchungsformular übernommen werden, in das der Reisende nur noch die fehlenden Daten, wie zum Beispiel den Zielort aus einer Liste mit allen verbleibenden Zielorten einträgt. Die vollständigen Buchungsdaten BD werden nach Bestätigung durch den Reisenden von dem mobilen Endgerät 20 wieder an die Verkehrsdienstleistungs-Kommunikationseinrichtung 30 gesandt, welche die Buchung vornimmt und anschließend eine Bestätigungsnachricht BN an das mobile Endgerät 20 versendet.

Anschließend kann der Reisende auch einen Bezahlvorgang durchführen, wobei er den aufgerufenen Fahrpreis lediglich bestätigen muss. Ein elektronischer Geldtransfer kann zum Beispiel mit Hilfe des für das mobile Endgerät zuständigen Netzanbieters bewerkstelligt werden, der den Betrag automatisiert vom Girokonto des Reisenden abbucht und auf ein Konto des betreffenden Reisedienstleisters überweist. Damit der Reisende mit seinem mobilen Endgerät 20 die Verkehrsdienstleistungs-Kommunikationseinrichtung 30 auch dann adressieren kann, wenn ihm deren Netzadresse oder Kurzwahlnummer nicht bekannt ist, kann der Identifizierungscode ID zusätzlich auch diese Informationen umfassen. In diesem Fall benötigt der Reisende kein auf einen spezifischen Reisedienstleister ausgerichtetes Anwendungsprogramm, sondern kann zum Beispiel mit Hilfe eines universalen Anwendungsprogramms, welches mit beliebigen Reisedienstleistern kommunizieren kann und auch Buchungs- und Bezahlvorgänge durchführen kann, den der Identifizierungsmarke 11 zugeordneten Reisedienstleister bzw. dessen Reisedienstleistungsserver 30 adressieren und mit diesem kommunizieren. Bei einer Ticketbuchung über einen Reisedienstleister können über dessen gespeicherte Serverdaten auch Mehrfachfahrkarten, Gruppenkarten für mehrere gescannte Sitzplätze und Rabattkarten eines Fahrgasts berücksichtigt werden, um die günstigste Buchung abzurechnen. Außerdem kann dann eine Monatsabrechnung an den Fahrgast erfolgen.

Auf diese Weise muss sich der Reisende keine Gedanken über die Identität eines Reisedienstleisters machen, dessen Angebot er wahrnehmen möchte. Außerdem muss der Reisende auch keine Adressen verschiedener Reisedienstleister sammeln und heraussuchen, da dieser Vorgang bei dem in FIG 1 veranschaulichten Ausführungsbeispiel automatisiert vor sich geht, wobei die gesuchte Adresse eines Reisedienstleistungsservers 30 von einem Identifizierungscode ID einer auszulesenden Identifizierungsmarke 11 umfasst ist.

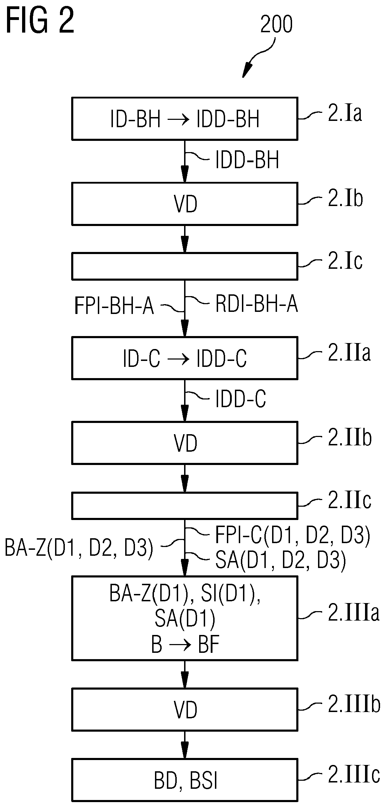

In FIG 2 ist ein Flussdiagramm 200 gezeigt, mit dem ein Verfahren zur Kommunikation eines Reisenden mit einem Verkehrsdienstleister gemäß einem Ausführungsbeispiel der Erfindung veranschaulicht ist.

Bei dem Schritt 2.Ia nähert sich ein Reisender einer Bahnhofshalle in der Absicht, eine Reise mit einem Zug von dem Ort A, an dem sich ein Bahnhof BH-A befindet, zu einem Ort B zu unternehmen. Am Eingang des Bahnhofs BH-A befindet sich eine Identifizierungsmarke IDM-BH-A, welche der Reisende sogleich mit seinem Smartphone einliest. Dafür hält er den Bereich seines Smartphones 20 (siehe FIG 1), in dem eine Abtasteinheit 21 (siehe FIG 1) angeordnet ist, in kurzem Abstand von der Identifizierungsmarke IDM-BH-A, welche einen QR-Code ID-BH umfasst, und wartet, bis er eine Bestätigung von einem Smartphone 20 erhalten hat, dass der QR-Code ID-BH korrekt eingelesen wurde. Von seinem Smartphone 20 aus wird nun der eingelesene QR-Code ID-BH zum Beispiel mit Hilfe eines Anwendungsprogramms AP entschlüsselt und die darin enthaltenen Informationen IDD-BH ausgewertet. Der QR-Code ID-BH kann zum Beispiel eine Identifikationsangabe des Bahnhofs, wie zum Beispiel die Bezeichnung "Bahnhof der Stadt A" enthalten". Weiterhin umfasst der QR-Code ID-BH in dem konkreten Ausführungsbeispiel auch eine Kurzwahlnummer und eine Web-Adresse einer Servereinheit 30 (siehe FIG 1) eines den Bahnhof BH-A und die an dem Bahnhof BH-A der Stadt A ankommenden Züge betreibenden Verkehrsdienstleisters VD. Alternativ können auch mehrere Kurzwahlnummern und Web-Adressen von verschiedenen Betreibern und Dienstleistern in dem QR-Code ID-BH gespeichert sein, wenn zum Beispiel der Bahnhof von einem anderen Unternehmen betrieben wird als die Züge, welche in dem jeweiligen Bahnhof halten.

Auf Basis der genannten Adressinformation adressiert nun das Smartphone bei einem Schritt 2.Ib automatisiert eine Servereinheit 30 eines den Bahnhof BH-A bzw. die dort ankommenden Züge betreibenden Verkehrsdienstleisters VD bzw. aller dort ansässigen Verkehrsdienstleister, in diesem Ausführungsbeispiel ein Bahnunternehmen, und übermittelt dieser die Identifikationsinformationen IDD-BH des eingelesenen und ausgewerteten QR-Codes ID-BH.

Nun sucht die Servereinheit 30 des Verkehrsdienstleisters VD bei einem Schritt 2.Ic nach mit dem identifizierten "Bahnhof der Stadt A" in Verbindung zu bringenden Reisedienstleistungsinformationen über alle Informationskanäle, die ihr zur Verfügung stehen. Beispielsweise ermittelt die Servereinheit 30 Fahrplaninformationen FPI-BH-A zu Zügen, welche zu dem aktuellen Zeitpunkt oder später von dem Bahnhof BH-A der Stadt A abfahren. Weiterhin sucht die Servereinheit 30 auch nach Informationen hinsichtlich eines Dienstleistungs- und Warenangebots innerhalb des Bahnhofs BH-A, zum Beispiel in dort untergebrachten Geschäften usw., und übermittelt alle diese Daten RDI-BH-A an das Smartphone 20 des Reisenden.

Der Reisende erfährt nun anhand der von der Servereinheit 30 erhaltenen Informationen RDI-BH-A, dass ein Zug zeitnah an einem bestimmten Bahnsteig C zu seinem gewünschten Fahrtziel, die Stadt B, abfährt. Er begibt sich sofort zu dem Bahnsteig C und liest bei einem Schritt 2.IIa an dem Bahnsteig C mit seinem Smartphone 20 einen dort angebrachten Identifizierungscode ID-C ein. Der Identifizierungscode ID-C wird erneut entschlüsselt und es wird bei einem Schritt 2.IIb erneut eine Servereinheit 30 eines Verkehrsdienstleisters VD anhand der in dem Identifizierungscode ID-C enthaltenen Information IDD-C adressiert und mit den Informationsdaten IDD-C des eingelesenen Identifizierungscodes ID-C versorgt. Bei einem Schritt 2.IIc erkennt nun die Servereinheit 30 aufgrund der Informationsdaten IDD-C des Identifizierungscodes ID-C, dass sich der Reisende aktuell auf dem Bahnsteig C befindet, und sendet an dessen Smartphone 20 Fahrplaninformationen FPI-C(D1, D2, D3) bezüglich der in der nächsten Zeit an dem Bahnsteig C eintreffenden Züge D1, D2, D3. Weiterhin wird seitens des Servers 30 auch bereits ein Buchungsangebot BA-Z(D1, D2, D3) hinsichtlich der genannten Züge D1, D2, D3 an das Smartphone 20 des Reisenden sowie weitere Angebote SA(D1, D2, D3) für eine Sitzplatzreservierung in den genannten Zügen D1, D2, D3 und ähnliches versandt. Dabei werden die bereits bekannten Informationen in einem dem Reisenden über sein Smartphone 20 angezeigten Buchungsformular BF automatisiert ausgefüllt. Beispielsweise sind in dem Buchungsformular BF bereits der Startort A des jeweiligen Zugs D1, D2, D3 sowie der Name des Buchenden, welcher zum Beispiel mit der Telefonnummer oder Identifikationsnummer des Smartphones 20 des Reisenden verknüpft ist, eingetragen.

Der Reisende betrachtet bei dem Schritt 2.IIIa ihn interessierende Informationen SI(D1) und Angebote BA-Z(D1), SA(D1) zu einem Zug D1 und bucht eine Fahrt mit dem Zug D1 von der Stadt A zur Stadt B zur aktuellen Abfahrtszeit, indem er ein mit Hilfe eines Anwendungsprogramms AP auf der Anzeige seines Smartphones 20 angezeigtes und bereits zum größten Teil automatisiert ausgefülltes Buchungsformular BF ausfüllt. Auch der Name des Reisenden kann zum Beispiel mit Hilfe des Anwendungsprogramms, dem dessen Name bekannt ist, automatisiert in dem Buchungsformular eingetragen werden. Beispielsweise trägt der Reisende noch den Zielort B aus einer Liste mit allen verbleibenden Zielorten in sein Buchungsformular BF ein. Die Buchungsdaten BD werden anschließend bei einem Schritt 2.IIIb von dem Smartphone aus an die zuständige Servereinheit 30 des betreffenden Reisedienstleisters VD gesendet, welche auf Basis der empfangenen Informationen BD einen Buchungsvorgang ausführt und bei dem Schritt 2.IIIc dem Reisenden auf sein Smartphone eine Bestätigung BSI sendet.

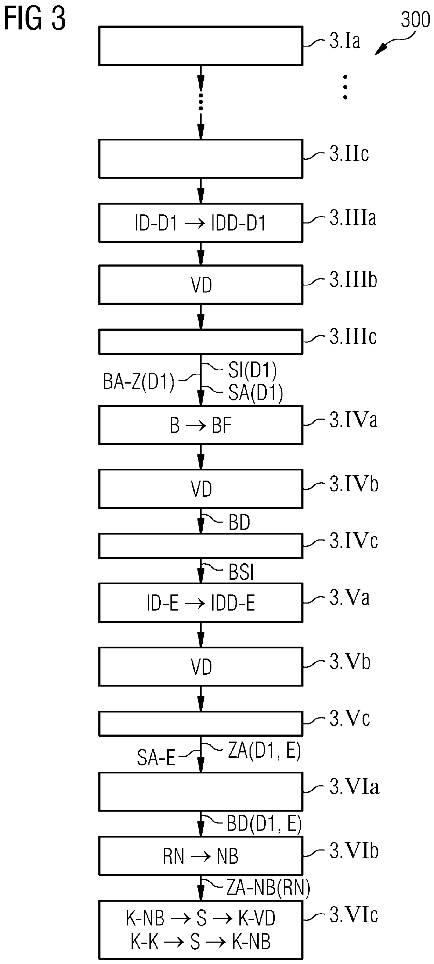

In FIG 3 ist ein Verfahren zur Kommunikation eines Reisenden mit einem Verkehrsdienstleister gemäß einem zweiten Ausführungsbeispiel der Erfindung veranschaulicht. Die Schritte 3.Ia bis 3.IIc entsprechen den Schritten 2.Ia bis 2.IIc des ersten Ausführungsbeispiels und wurden der besseren Übersichtlichkeit halber in FIG 3 weggelassen.

Anstatt nach Erhalt eines Buchungsangebots, wie bei dem in FIG 2 gezeigten Ausführungsbeispiel, die Buchung vorzunehmen, betritt der Reisende aufgrund von Zeitnot, beispielsweise weil der gewünschte Zug D1 bereits abzufahren droht, bei dem Schritt 3.IIIa umgehend den gewünschten Zug D1, ohne vorher irgendwelche Buchungs- oder Reservierungsvorgänge zu beginnen. Dabei liest der Reisende am Zustieg zu dem Zug D1 einen dem Zug D1 zugeordneten Identifizierungscode ID-D1 ein. Anschließend wird der eingelesene Identifizierungscode ID-D1 entschlüsselt, d.h. es werden Identifikationsdaten IDD-D1 des Zugs D1 ermittelt und es wird bei dem Schritt 3.IIIb erneut eine Servereinheit 30 eines Verkehrsdienstleisters VD anhand der in dem Identifizierungscode ID-D1 enthaltenen Information IDD-D1 adressiert und diese mit den Informationen IDD-D1 des eingelesenen Identifizierungscodes ID-D1 versorgt. Bei einem Schritt 3.IIIc erkennt nun die Servereinheit 30 aufgrund der Identifikationsdaten IDD-D1 des Identifizierungscodes ID-D1, dass sich der Reisende aktuell in dem Zug D1 befindet und sendet an dessen Smartphone 20 Informationen SI(D1) bezüglich der in dem betreffenden Zug D1 vorhandenen freien Sitzplätze und deren Position im Zug D1. Weiterhin wird seitens des Servers 30 auch ein Buchungsangebot BA-Z(D1) hinsichtlich einer Fahrt mit dem genannten Zug D1 von dem Bahnhof BH-A der Stadt A aus an das Smartphone 20 des Reisenden sowie weitere Angebote SA(D1) für eine Sitzplatzreservierung und ähnliches versandt. Dabei werden die bereits bekannten Informationen in einem dem Reisenden über sein Smartphone 20 angezeigten Buchungsformular BF automatisiert ausgefüllt. Beispielsweise sind in dem Buchungsformular BF bereits die derzeitige letzte Haltestelle als Startort A des Zugs D1 für die zu buchende Fahrt sowie eine offizielle Bezeichnung des Zugs D1 und dessen aktuelle Abfahrtszeit von der letzten Haltestelle sowie der Name des Reisenden bzw. seine Telefonnummer eingetragen.

Der Reisende bucht nun bei dem Schritt 3.IVa in aller Ruhe eine Fahrt mit dem Zug D1 von der Stadt A zur Stadt B zur aktuellen Abfahrtszeit, indem er ein mit Hilfe eines Anwendungsprogramms AP auf der Anzeige seines Smartphones 20 angezeigtes und bereits zum größten Teil automatisiert ausgefülltes Buchungsformular BF vollständig ausfüllt. Auch der Name des Reisenden kann zum Beispiel mit Hilfe des Anwendungsprogramms, dem dessen Name bekannt ist, automatisiert in dem Buchungsformular eingetragen werden. Zusätzlich trägt der Reisende noch den Zielort B aus einer Liste mit allen verbleibenden Zielorten in sein Buchungsformular BF ein. Die Buchungsdaten BD werden anschließend bei einem Schritt 3.IVb von dem Smartphone 20 aus an die zuständige Servereinheit 30 des zuständigen Verkehrsdienstleisters VD gesendet, welcher auf Basis der empfangenen Informationen BD einen Buchungsvorgang ausführt und bei dem Schritt 3.IVc dem Reisenden auf dessen Smartphone 20 eine Bestätigung BSI sendet.

In der Zwischenzeit hat sich der Reisende in dem Zug D1 zu einem ihm zusagenden freien Sitzplatz E begeben und liest bei einem Schritt 3.Va erneut einen nun dem ausgewählten Sitzplatz des Zuges D1 zugeordneten Identifizierungscode ID-E mit den Identifizierungsdaten IDD-E ein. Der eingelesene Identifizierungscode ID-E wird entschlüsselt und es wird bei dem Schritt 3.Vb erneut eine Servereinheit 30 anhand der in dem Identifizierungscode ID-E enthaltenen Information IDD-E adressiert und mit der Information IDD-E des eingelesenen Identifizierungscodes ID-E versorgt. Bei einem Schritt 3.Vc erkennt nun die Servereinheit 30 des betreffenden Verkehrsdienstleisters VD aufgrund der Identifizierungsdaten IDD-E des Identifizierungscodes ID-E, dass der Reisende sich den Sitzplatz E ausgesucht hat und sendet an dessen Smartphone 20 Informationen bezüglich eines den freien Sitzplatz betreffenden Reservierungsangebots SA-E. Weiterhin wird seitens des Servers 30 auch eine Aufforderung ZA(D1, E) zur Zahlung der gebuchten Fahrt mit dem Zug D1 von der Stadt A zur Stadt B sowie der angebotenen Reservierung des Sitzplatzes E versandt.

Bei dem Schritt 3.VIa akzeptiert der Reisende das Reservierungsangebot SA-E und sendet mit Hilfe seines Smartphones 20 eine Bestätigungsnachricht BN(D1, E) zur Bezahlung der gebuchten Dienstleistungen an den betreffenden Verkehrsdienstleistungsserver 30. Der Verkehrsdienstleistungsserver 30 identifiziert nun bei einem Schritt 3.VIb anhand der Rufnummer RN des mit ihm kommunizierenden Smartphones 20 den Betreiber NB des von dem Smartphone 20 genutzten Netzes und sendet an diesen eine Zahlungsaufforderung ZA-NB(RN) in Verbindung mit der betreffenden Rufnummer RN. Der Betreiber NB ordnet nun anhand der Rufnummer RN bei einem Schritt 3.VIc die Zahlungsaufforderung ZA-NB(RN) dem betroffenen Kunden, d.h. dem Reisenden zu, überweist die geforderte Summe S auf ein Konto K-VD des Verkehrsdienstleisters VD und zieht die überwiesene Summe S mit dem nächsten turnusgemäßen Telefongebühreneinzug per Lastschrift vom Konto K-K seines Kunden, d.h. des Reisenden, auf sein Konto K-NB ein. Somit muss sich der Reisende bei dem Verkehrsdienstleister VD selbst nicht einmal registrieren bzw. muss dort keine sensiblen Daten, wie zum Beispiel seine Bankverbindung oder ähnliches, hinterlegen. Durch die Kommunikation mit Hilfe der Identifizierungscodes ID-BH, ID-C, ID-E kann ein Reisender seine Reisepläne spontan in die Tat umsetzen, ohne sich selbst um Buchungsformalitäten und Zahlungsmodalitäten kümmern zu müssen, wie es herkömmlich notwendig wäre. Das beschriebene Verfahren ermöglicht es auch ungeübten Reisenden, öffentliche Verkehrsmittel spontan und ohne aufwändige Vorbereitungen, wie zum Beispiel das Recherchieren von Zugverbindungen, das umständliche Betätigen von Fahrkartenautomaten und ähnliches, zu nutzen. Da dieses Problem für viele potentielle Nutzer öffentlicher Verkehrsmittel ein abschreckendes Hindernis darstellt, ist nun bei Anwendung des beschriebenen erfindungsgemäßen Verfahrens mit einer deutlich erhöhten Nutzung und Beliebtheit öffentlicher Verkehrsmittel zu rechnen. Im einfachsten Fall betritt ein Fahrgast spontan ein Fahrzeug, setzt sich auf einen nicht reservierten Sitzplatz und startet auf seinem Smartphone das Anwendungsprogramm zum Scannen des am Sitzplatz befindlichen QR-Codes. Danach wählt der Fahrgast auf seinem Smartphone aus einer Liste seinen gewünschten möglichen Zielort aus, und erhält die gebuchte Fahrkarte zurückgesendet. Alle anderen Informationen der Ticketbuchung werden automatisch ausgefüllt und übertragen.

Es wird abschließend noch einmal darauf hingewiesen, dass es sich bei dem vorbeschriebenen Reisedienstleistungssystem 100, und den beschriebenen Verfahren lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Reisedienstleistungssystem (100) für die Kommunikation zwischen einem Reisenden und einem Verkehrsdienstleister, aufweisend:
- eine mobile, einem Reisenden zugeordnete Kommunikationseinrichtung (20), welche dazu eingerichtet ist, drahtlos mit anderen Kommunikationseinrichtungen (10, 30) zu kommunizieren,
- eine Identifizierungsmarke (11), welche an einer Verkehrsdienstleistungseinrichtung (10) des Verkehrsdienstleisters angeordnet ist und einen durch die mobile Kommunikationseinrichtung (20) maschinell lesbaren Identifizierungscode (ID) aufweist, wobei der maschinenlesbare Code (ID) einen QR-Code und/ oder einen Bar-Code umfasst,
- eine Verkehrsdienstleistungs-Kommunikationseinrichtung (30), welche dazu eingerichtet ist, von der mobilen Kommunikationseinrichtung (20) eine von dem Identifizierungscode (ID) umfasste Identitäts-Information (IDD) zu empfangen, eine der Identitäts-Information (IDD) zugeordnete Verkehrsdienstleistungseinrichtung (10) zu identifizieren und dem Reisenden über dessen mobile Kommunikationseinrichtung (20) der identifizierten Verkehrsdienstleistungseinrichtung (10) zugeordnete Reisedienstleistungen (RDI, FPI) zur Verfügung zu stellen.

2. Reisedienstleistungssystem nach Anspruch 1, wobei die mobile Kommunikationseinrichtung (20) eine Abtasteinheit (21) aufweist, mit der der Identifizierungscode (ID) maschinell einlesbar ist, wobei die Abtasteinheit (21) vorzugsweise eine Nahbereichsabtasteinheit umfasst und der Identifizierungscode (ID) einen Nahbereichsabtastcode umfasst.

3. Reisedienstleistungssystem nach Anspruch 1 oder 2, wobei die Verkehrsdienstleistungseinrichtung (10) eine Haltestelle oder einen Zugang eines Verkehrsmittels (D1, D2, D3) und/oder einen Sitzplatz des Verkehrsmittels (D1, D2, D3) umfasst.

4. Reisedienstleistungssystem nach einem der Ansprüche 1 bis 3, wobei die Reisedienstleistungen die Übermittlung von auf die individuelle Situation des Reisenden abgestimmten Reisedienstleistungsinformationen (RDI) umfassen.

5. Reisedienstleistungssystem nach einem der Ansprüche 1 bis 4, wobei die Reisedienstleistungen das Anbieten und Durchführen von Ticket-Buchungsdienstleistungen (BD) und von Bezahldienstleistungen umfassen.

6. Reisedienstleistungssystem nach einem der Ansprüche 1 bis 5, wobei die Verkehrsdienstleistungs-Kommunikationseinrichtung (30) dazu eingerichtet ist, mit der mobilen Kommunikationseinrichtung (20) über eine sichere WLAN-Verbindung oder eine LTE-Verbindung oder andere Funkverbindungen zu kommunizieren.

7. Reisedienstleistungssystem nach einem der Ansprüche 1 bis 6, wobei die Verkehrsdienstleistungs-Kommunikationseinrichtung (30) einen Reisedienstleistungs-Datenspeicher (33) umfasst, welcher den identifizierten Verkehrsdienstleistungseinrichtungen (10) zugeordnete Informationen speichert.

8. Reisedienstleistungssystem nach Anspruch 7, wobei die den identifizierten Verkehrsdienstleistungseinrichtungen (10) zugeordneten Informationen die Art und/oder die geographische Position der Verkehrsdienstleistungseinrichtung (10) und/oder eine voraussichtlich abzufahrende Fahrtroute bzw. einen entsprechenden Fahrplan umfassen.

9. Reisedienstleistungssystem nach einem der Ansprüche 1 bis 8, wobei der maschinenlesbare Code (ID) einen RFID-Code umfasst.

10. Reisedienstleistungssystem nach einem der Ansprüche 1 bis 9, wobei die Verkehrsdienstleistungs-Kommunikationseinrichtung (30) dazu eingerichtet ist, auf Basis einer der folgenden, durch das Auslesen des Identifizierungscodes (ID) ermittelten Informationen (IDD) eine Ticketbuchung durchzuführen und eine gebuchte elektronische Fahrkarte an die mobile Kommunikationseinrichtung (20) des Fahrgasts zu senden:
- Telefonnummer des Fahrgasts,
- Fahrzeugnummer oder Wagonnummer mit Sitzplatznummer,
- Beförderungsklasse,
- Startort (A) und Zielort (B) für die zu buchende Fahrt.

11. Reisedienstleistungssystem nach einem der Ansprüche 1 bis 10, wobei auf der mobilen Kommunikationseinrichtung (20) ein Anwendungsprogramm (AP) installiert ist, welches dazu eingerichtet ist, einen erfassten Identifizierungscode (ID) auszulesen und die darin enthaltenen Informationen (IDD) an die Verkehrsdienstleistungs-Kommunikationseinrichtung (30) zu übermitteln und Buchungs- und Bezahloperationen durch Kommunikation mit der Verkehrsdienstleistungs-Kommunikationseinrichtung (30) durchzuführen.

12. Reisedienstleistungssystem nach einem der Ansprüche 1 bis 11, wobei die Verkehrsdienstleistungs-Kommunikationseinrichtung (30) dazu eingerichtet ist, auf Basis der Telefonnummer des Fahrgasts und einer über die Verkehrsdienstleistungs-Kommunikationseinrichtung (30) vorgenommenen Ticketbuchung einen elektronischen Bezahlvorgang durchzuführen.

13. Verfahren für die Kommunikation zwischen einem Reisenden und einem Verkehrsdienstleister, wobei
- mit Hilfe einer mobilen, einem Reisenden zugeordneten Kommunikationseinrichtung (20), welche dazu eingerichtet ist, drahtlos mit anderen Kommunikationseinrichtungen (11, 30) zu kommunizieren, eine Identifizierungsmarke (11), welche an einer Verkehrsdienstleistungseinrichtung (10) des Verkehrsdienstleisters angeordnet ist und einen durch die mobile Kommunikationseinrichtung (20) maschinell lesbaren Identifizierungscode (ID) welcher einen QR-Code und/ oder einen Bar-Code umfasst, aufweist, ausgelesen wird und
- eine von dem Verkehrsdienstleister betriebene Verkehrsdienstleistungs-Kommunikationseinrichtung (30) von der mobilen Kommunikationseinrichtung (20) eine von dem Identifizierungscode (ID) umfasste Identitäts-Information (IDD) empfängt, eine der Identitäts-Information (IDD) zugeordnete Verkehrsdienstleistungseinrichtung (10) identifiziert und dem Reisenden über dessen mobile Kommunikationseinrichtung (20) der identifizierten Verkehrsdienstleistungseinrichtung (10) zugeordnete Reisedienstleistungen zur Verfügung stellt.

14. Computerprogrammprodukt mit einem Computerprogramm, welches direkt in eine Speichereinrichtung einer Rechnereinheit einer oder mehrerer Komponenten eines Verkehrsdienstleistungssystems (100) nach einem der Ansprüche 1 bis 12 ladbar ist, mit Programmabschnitten, um alle Schritte des Verfahrens nach Anspruch 13 auszuführen, wenn das Computerprogramm in einer oder mehreren Komponenten des Verkehrsdienstleistungssystems (100) ausgeführt wird.

15. Computerlesbares Medium, auf welchem von einer Rechnereinheit einlesbare und ausführbare Programmabschnitte gespeichert sind, um alle Schritte des Verfahrens nach Anspruch 13 auszuführen, wenn die Programmabschnitte von der Rechnereinheit ausgeführt werden.
